# EUROPEAN PATENT APPLICATION

(11) **EP 4 651 405 A1**
(43) Date of publication of application: **19.11.2025**
(21) Application number: 24741271.1
(22) Date of filing: 10.01.2024
(51) Int. Cl.: H04J 3/06

(54) **INTER-SATELLITE TIME SYNCHRONIZATION METHOD AND APPARATUS, SATELLITE AND STORAGE MEDIUM**

(30) Priority: 10.01.2023 CN 202310034928
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HAN, Liuyan, Beijing 100032 (CN); LU, Rongduo, Beijing 100032 (CN)
(74) Representative: Murgitroyd & Company
(86) International application number: PCT/CN2024/071492
(87) International publication number: WO 2024/149274

(57) **Abstract**

An inter-satellite time synchronization method, an apparatus, a satellite, and a storage medium are provided. The method includes: transmitting a first message to at least one second satellite; where the first message carries a transmission timestamp; receiving first information and/or a second message sent by the at least one second satellite.

## Description

### CROSS REFERENCE OF RELATED APPLICATION

The present disclosure claims a priority of Chinese patent application No. 202310034928.0 filed on Jan. 10, 2023, which is incorporated herein by reference in its entirety.

### TECHNICAL FIELD

The present disclosure relates to the field of communication technologies, and in particular, to an inter-satellite time synchronization method, an apparatus, a satellite, and a storage medium.

### BACKGROUND

Currently, networking through low earth orbit (LEO) satellites can provide satellite services for areas outside the coverage of gateway stations, where satellite services such as satellite navigation and positioning, remote sensing, and surveying and mapping require satellites to have high-precision time synchronization information. In related technologies, networked satellites cannot perform time synchronization using existing time synchronization technologies or time synchronization protocols.

### SUMMARY

To solve problems in the related technologies, embodiments of the present disclosure provide an inter-satellite time synchronization method, an apparatus, a satellite, and a storage medium.

The embodiments of the present disclosure is implemented as follows.

Embodiments of the present disclosure provide an inter-satellite time synchronization method, applied to a first satellite. The method includes:
transmitting a first message to at least one second satellite; where the first message carries a transmission timestamp;
receiving first information and/or a second message sent by the at least one second satellite.

In the above embodiment, the first information includes a first difference value and/or a reception timestamp of the first message; where the first difference value presents a difference between the reception timestamp and a corresponding transmission timestamp of the first message.

In the above embodiment, the second message carries a transmission timestamp.

In the above embodiment, the method further includes:
transmitting corresponding second information to the at least one second satellite; where the second information includes a second difference value and/or a reception timestamp of the second message; where the second difference value presents a difference between the reception timestamp and a corresponding transmission timestamp of the second message.

In the above embodiment, the method further includes one of:
adjusting or calibrating a local time of the first satellite based on a first time offset between the first satellite and the second satellite;
when a number of second satellites is greater than or equal to 2, adjusting or calibrating the local time of the first satellite based on a mean or weighted average of first time offsets between the first satellite and different second satellites.

In the above embodiment, the method further includes:
determining the first time offset between the first satellite and the second satellite at least based on the transmission timestamp and/or a corresponding reception timestamp of the first message, and the transmission timestamp and/or a corresponding reception timestamp of the second message.

In the above embodiment, the determining the first time offset between the first satellite and the second satellite includes:
determining a first transmission timestamp of the first message and/or a second transmission timestamp of the second message based on the transmission timestamp of the first message and/or the transmission timestamp of the second message;
determining the first time offset between the first satellite and the second satellite based on at least one of:
   the first transmission timestamp and a corresponding reception timestamp;
   the second transmission timestamp and a corresponding reception timestamp;
   a first error correction value.

In the above embodiment, the first transmission timestamp and the second transmission timestamp are identical; or,
a difference between the first transmission timestamp and the second transmission timestamp is a minimum value among third difference values; where the third difference values are differences between transmission timestamps of the first message and transmission timestamps of the second message.

In the above embodiment, the first message and the second message are both periodic messages.

In the above embodiment, the first satellite and the at least one second satellite are located in a same orbit, and the at least one second satellite is adjacent to the first satellite.

In the above embodiment, the first satellite and the at least one second satellite are located in different orbits; where the first message and the second message are both transmitted during an establishment of a connection between the first satellite and a corresponding second satellite.

The method further includes:
receiving a Global Navigation Satellite System (GNSS) time;
updating the local time of the first satellite based on the GNSS time.

In the above embodiment, the method further includes:
when the first satellite fails to receive the GNSS time, maintaining the local time of the first satellite according to a local time frequency.

Embodiments of the present disclosure also provide an inter-satellite time synchronization method, applied to a second satellite. The method includes:
receiving a first message sent by at least one first satellite; where the first message carries a transmission timestamp;
transmitting first information and/or a second message to the at least one first satellite.

In the above embodiment, the first information includes a first difference value and/or a reception timestamp of the first message; where the first difference value presents a difference between the reception timestamp and a corresponding transmission timestamp of the first message.

In the above embodiment, the second message carries a transmission timestamp.

In the above embodiment, the method further includes:
receiving second information sent by the first satellite; where,
the second information includes a second difference value and/or a reception timestamp of the second message; where the second difference value presents a difference between the reception timestamp and a corresponding transmission timestamp of the second message.

In the above embodiment, the method further includes one of:
adjusting or calibrating a local time of the second satellite based on a second time offset between the second satellite and the first satellite;
when a number of first satellites is greater than or equal to 2, adjusting or calibrating the local time of the second satellite based on a mean or weighted average of second time offsets between the second satellite and different first satellites.

In the above embodiment, the method further includes:
determining the second time offset between the second satellite and the first satellite at least based on the transmission timestamp and/or a corresponding reception timestamp of the first message, and the transmission timestamp and/or a corresponding reception timestamp of the second message.

In the above embodiment, the determining the second time offset between the second satellite and the first satellite includes:
determining a third transmission timestamp of the first message and/or a fourth transmission timestamp of the second message based on the transmission timestamp of the first message and/or the transmission timestamp of the second message;
determining the second time offset between the second satellite and the first satellite based on at least one of:
   the third transmission timestamp and a corresponding reception timestamp;
   the fourth transmission timestamp and a corresponding reception timestamp;
   a second error correction value.

In the above embodiment, the third transmission timestamp and the fourth transmission timestamp are identical; or,
a difference between the third transmission timestamp and the fourth transmission timestamp is a minimum value among fourth difference values; where the fourth difference values are differences between transmission timestamps of the first message and transmission timestamps of the second message.

In the above embodiment, the first message and the second message are both periodic messages.

In the above embodiment, the at least one first satellite and the second satellite are located in a same orbit, and the second satellite is adjacent to the at least one first satellite.

In the above embodiment, the at least one first satellite and the second satellite are located in different orbits; where the second message and the first message are both transmitted during an establishment of a connection between the second satellite and a corresponding first satellite.

In the above embodiment, the method further includes:
receiving a GNSS time;
updating the local time of the second satellite based on the GNSS time.

In the above embodiment, the method further includes:
when the second satellite fails to receive the GNSS time, maintaining the local time of the second satellite according to a local time frequency.

Embodiments of the present disclosure also provide an inter-satellite time synchronization apparatus, including:
a first transmitting unit, configured to transmit a first message to at least one second satellite; where the first message carries a transmission timestamp;
a first receiving unit, configured to receive first information and/or a second message sent by the at least one second satellite.

Embodiments of the present disclosure also provide an inter-satellite time synchronization apparatus, including:
a second receiving unit, configured to receive a first message sent by at least one first satellite; where the first message carries a transmission timestamp;
a second transmitting unit, configured to transmit first information and/or a second message to the at least one first satellite.

Embodiments of the present disclosure also provide a first satellite, including a first processor and a first communication interface, where
the first communication interface is configured to transmit a first message to at least one second satellite, and receive first information and/or a second message sent by the at least one second satellite; where,
the first message carries a transmission timestamp.

Embodiments of the present disclosure also provide a second satellite, including a second processor and a second communication interface, where
the second communication interface is configured to receive a first message sent by at least one first satellite, and transmit first information and/or a second message to the at least one first satellite; where,
the first message carries a transmission timestamp.

Embodiments of the present disclosure also provide a satellite, including a processor and a memory for storing a computer program executable on the processor,
where the processor is configured to, when running the computer program, perform the steps of any method on the first satellite side, or perform the steps of any method on the second satellite side.

Embodiments of the present disclosure also provide a storage medium, having a computer program stored thereon, where the computer program, when executed by a processor, implements the steps of any method on the first satellite side, or implements the steps of any method on the second satellite side.

In the inter-satellite time synchronization method, apparatus, satellite, and storage medium provided by the embodiments of the present disclosure, the first satellite transmits a first message to at least one second satellite; the first message carries a transmission timestamp; the second satellite receives the first message sent by at least one first satellite, and transmits first information and/or a second message to the at least one first satellite; the first satellite receives the first information and/or the second message sent by the at least one second satellite. In the above embodiment, the first message and the second message are transmitted in parallel, which can avoid changes in transmission delay caused by multiple serial interactions or multiple handshakes consuming a large amount of time, so that the first satellite and/or the second satellite can obtain accurate time synchronization information when performing time synchronization, improving the accuracy of the time synchronization information. There is no master-slave relationship between the first satellite and the second satellite, solving the problems of unstable satellite networking topology and the inability to establish long-term master-slave synchronization

### BRIEF DESCRIPTION OF THE DRAWINGS

FIG. 1 is a schematic diagram of an implementation process of an inter-satellite time synchronization method according to an embodiment of the present disclosure;
FIG. 2 is a schematic diagram of an implementation process of an inter-satellite time synchronization method according to an embodiment of the present disclosure;
FIG. 3 is a schematic diagram of an interaction process of an inter-satellite time synchronization method according to an embodiment of the present disclosure;
FIG. 4 is a schematic structural diagram of an inter-satellite time synchronization apparatus according to an embodiment of the present disclosure;
FIG. 5 is a schematic structural diagram of an inter-satellite time synchronization apparatus according to an embodiment of the present disclosure;
FIG. 6 is a schematic structural diagram of a first satellite according to an embodiment of the present disclosure; and
FIG. 7 is a schematic structural diagram of a second satellite according to an embodiment of the present disclosure.

### DETAILED DESCRIPTION

Time synchronization is the operational foundation of many communication systems. For example, base stations in mobile communication systems need to meet microsecond-level high-precision time synchronization requirements; otherwise, interference will exist between base stations. In related technologies, time synchronization can be achieved by installing satellite receivers at each base station; time synchronization can also be achieved based on ground time synchronization technologies, such as the Precision Time Protocol (PTP). PTP adopts a master-slave time synchronization mechanism: in a communication path, a master clock provides a source time for the next-level clock to synchronize, that is, for a slave clock to reference; the slave clock corrects its local time according to the time provided by the master clock by exchanging message packets with the master clock. Through a master-slave source selection algorithm, the time synchronization topology and tracking relationship can be determined.

With the development of space-air-ground integrated communications, inter-satellite networking has become a research hotspot for satellite networks. Networking through LEO satellites can provide satellite services for areas outside the coverage of gateway stations. Satellite services such as satellite navigation and positioning, remote sensing, and surveying and mapping require satellites to have high-precision time synchronization information.

Currently, the time synchronization information for a single satellite can be obtained by interacting with a gateway station, or by installing a GNSS receiver. However, when a large number of LEO satellites are networked, LEO satellites cannot obtain time synchronization information from the gateway station when they operate along their orbits over areas where interaction with the gateway station is impossible, and the GNSS receiver installed on each satellite faces problems such as payload limitations and reception accuracy.

In summary, in related technologies, a single satellite has the problem of failing to obtain time synchronization information or obtaining inaccurate time synchronization information, and satellites cannot obtain accurate time synchronization information from each other.

Additionally, because existing ground time synchronization technologies are suitable for master-slave time synchronization with a determined topological connection, networked satellites cannot perform time synchronization using existing time synchronization technologies or protocols for the following reasons:
1. The topological relationship of satellite networking changes over time, making it impossible to establish a stable master-slave relationship;
2. Existing time synchronization protocols are implemented based on handshake protocols (where communication parties send messages serially). During multiple interactions, a large amount of time is consumed, during which the relative positional relationship of the satellites has changed, causing the transmission delay to change, failing to satisfy the basis for time synchronization calculation under fixed delay conditions.

Based on this, in various embodiments of the present disclosure, the first satellite transmits a first message to at least one second satellite; the first message carries a transmission timestamp; the second satellite receives the first message sent by at least one first satellite, and transmits first information and/or a second message to the at least one first satellite; the first satellite receives the first information and/or the second message sent by the at least one second satellite. In the above embodiment, the first message and the second message are transmitted in parallel, which can avoid changes in transmission delay caused by multiple serial interactions or multiple handshakes consuming a large amount of time, so that the first satellite and/or the second satellite can obtain accurate time synchronization information when performing time synchronization, improving the accuracy of the time synchronization information. There is no master-slave relationship between the first satellite and the second satellite, solving the problems of unstable satellite networking topology and the inability to establish long-term master-slave synchronization.

The present disclosure will be further described in detail below with reference to the accompanying drawings and embodiments.

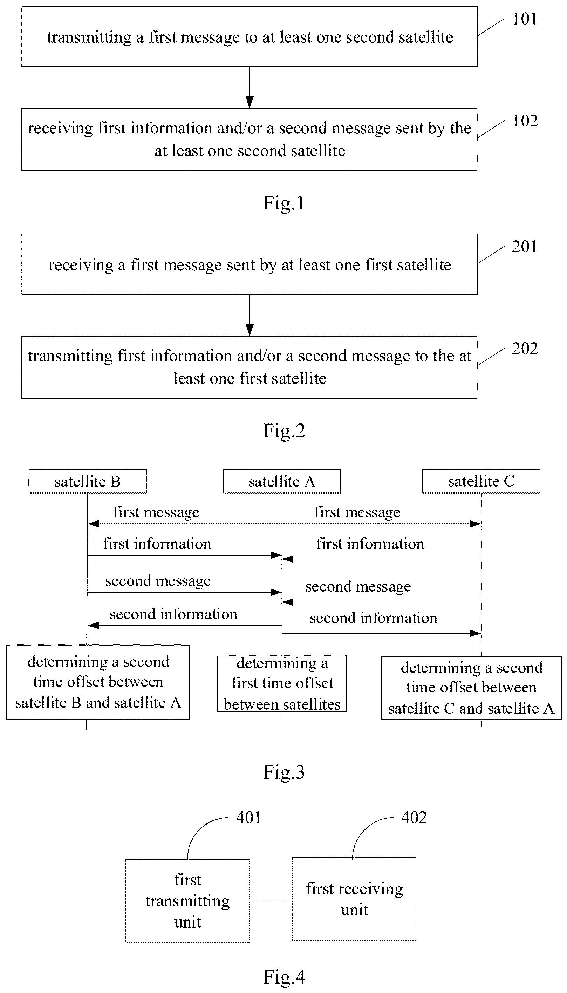

Embodiments of the present disclosure provide an inter-satellite time synchronization method applied to a first satellite. As shown in FIG. 1, the method includes:
Step 101: transmitting a first message to at least one second satellite.
where the first message carries a transmission timestamp.

Here, the transmission timestamp carried by the first message is the transmission timestamp of the first message. The at least one second satellite has a connection relationship with the first satellite. That is, the first satellite and the second satellite interact only when a connection relationship exists.

The first satellite generally refers to any satellite, and the second satellite generally refers to a satellite having a connection relationship with the first satellite. The number of second satellites having a connection relationship with the first satellite is greater than or equal to 1. The number of first messages is greater than or equal to 1.

Step 102: receiving first information and/or a second message sent by the at least one second satellite.

Here, the first information represents related information of the first message. The second message may or may not carry related information of the first message. When the first satellite receives the second message, it can record a reception timestamp of the second message.

It should be noted that the first information and the second message may be transmitted in parallel by the second satellite. The transmission of the first message by the first satellite and the transmission of the second message by the second satellite are executed in parallel.

In one embodiment, the first information includes a first difference value and/or a reception timestamp of the first message; where the first difference value presents a difference between the reception timestamp and a corresponding transmission timestamp of the first message.

Here, the reception timestamp of the first message is recorded by the second satellite when receiving the first message. The first difference value can be understood as: the difference between the reception timestamp of the first message recorded by the second satellite and the transmission timestamp carried by that first message. The first difference value corresponds one-to-one with the first message. The first difference value can be used by the first satellite to determine the reception timestamp of the corresponding first message. For example, the first satellite can determine the reception timestamp of that first message based on the first difference value corresponding to the first message and the transmission timestamp of that first message.

In one embodiment, the second message carries a transmission timestamp.

Here, when the first satellite receives the second message, it records the reception timestamp of the second message, and can also associatively store the reception timestamp of the second message and the transmission timestamp carried by the second message. The transmission timestamp carried by the second message is the transmission timestamp of the second message. The number of second messages transmitted by each second satellite is greater than or equal to 1.

In one embodiment, the first message and the second message are both periodic messages.

Here, the first satellite periodically transmits the first message, and the second satellite periodically transmits the second message. The transmission period of the first message and the transmission period of the second message are the same or approximately the same.

It should be noted that since the second message is a periodic message, the first satellite can obtain the transmission period of the second message from the second satellite, and thus obtain the transmission time of the second message based on its transmission period. In this way, even if the second message does not carry a transmission timestamp, the first satellite can determine the first time offset between the first satellite and the second satellite based on the reception timestamp of the second message and the transmission time of the second message.

Of course, when the second message carries a transmission timestamp, the first satellite can determine the first time offset between the first satellite and the second satellite based on the reception timestamp and the transmission timestamp of the second message.

When satellites perform time synchronization, the time synchronization can be performed by the first satellite to adjust or calibrate the local time of the first satellite; or it can be performed by the second satellite to adjust or calibrate the local time of the second satellite. Since the second satellite can record the transmission timestamp and reception timestamp of each first message, to facilitate the second satellite performing time synchronization, the first satellite can return the reception timestamp and/or the second difference value corresponding to the second message sent by the second satellite to the second satellite. Based on this, in one embodiment, the method further includes:
transmitting corresponding second information to the at least one second satellite; where the second information includes a second difference value and/or a reception timestamp of the second message; where the second difference value presents a difference between the reception timestamp and a corresponding transmission timestamp of the second message.

Here, when the first satellite receives the second message sent by the second satellite, it transmits the second information corresponding to that second satellite to the second satellite that sent the second message.

The second information corresponds one-to-one with the second message. The second difference value can be understood as: the difference between the reception timestamp of the second message recorded by the first satellite and the transmission timestamp carried by that second message.

The second difference value can be used by the second satellite to determine the reception timestamp of the corresponding second message. For example, the second satellite can determine the reception timestamp of that second message based on the second difference value corresponding to the second message and the transmission timestamp of that second message.

When the first satellite performs time synchronization, the first satellite can adjust or calibrate the local time of the first satellite based on the first time offset between the first satellite and the second satellite, to improve the accuracy of the local time of the first satellite, keeping the first satellite and the second satellite time-synchronized. Based on this, in one embodiment, the method further includes one of:
adjusting or calibrating the local time of the first satellite based on the first time offset between the first satellite and the second satellite;
when the number of second satellites is greater than or equal to 2, adjusting or calibrating the local time of the first satellite based on the mean or weighted average of first time offsets between the first satellite and different second satellites.
where the first time offset is determined at least based on related information of the first message and related information of the second message sent by the second satellite.

Here, the first satellite determines the first time offset between the first satellite and the corresponding second satellite based on related information of the first message and related information of the second message sent by the second satellite. The related information of the first message includes the transmission timestamp of the first message and the first information; the related information of the second message includes the transmission timestamp of the second message and its corresponding reception timestamp.

When the number of second satellites having a connection relationship with the first satellite is 1, adjust or calibrate the local time of the first satellite based on the first time offset between the first satellite and the second satellite.

When the number of second satellites having a connection relationship with the first satellite is greater than or equal to 2, determine the mean or weighted average of the first time offsets based on the first time offsets between the first satellite and different second satellites; adjust or calibrate the local time of the first satellite based on the determined mean or weighted average. The different second satellites can be some or all of the second satellites having a connection relationship with the first satellite.

Before performing time synchronization, the first satellite needs to first determine the first time offset between the first satellite and the second satellite. Based on this, in one embodiment, the method further includes:
determining the first time offset between the first satellite and the second satellite at least based on the transmission timestamp and/or a corresponding reception timestamp of the first message, and the transmission timestamp and/or a corresponding reception timestamp of the second message.

Here, the first satellite determines the transmission timestamp and the corresponding reception timestamp of the first message based on the transmission timestamp of the first message and the corresponding first information; determines the first time offset between the first satellite and the corresponding second satellite at least based on the transmission timestamp and the corresponding reception timestamp of the first message, and based on the transmission timestamp and the corresponding reception timestamp of the second message; the corresponding second satellite refers to the second satellite that sent the second message. At this time, the first message and the second message can be periodic or non-periodic messages.

Of course, when both the first message and the second message are periodic messages, and the transmission period of the first message is the same as the transmission period of the second message, if the transmission time of the first message and the transmission time of the second message are the same within the same period, the first satellite can determine the first time offset between the first satellite and the second satellite at least based on the transmission timestamp of the first message and the reception timestamp of the second message; if the transmission time of the first message and the transmission time of the second message are the same within the same period, and the first satellite obtains the reception timestamp of the first message and the transmission timestamp of the second message, the first satellite can also determine the first time offset between the first satellite and the second satellite at least based on the transmission timestamp of the second message and the reception timestamp of the first message; if the transmission time of the first message and the transmission time of the second message are different within the same period, the first satellite can determine the first time offset between the first satellite and the second satellite at least based on the transmission timestamp of the first message and the transmission timestamp of the second message.

To improve the accuracy of the first time offset determined by the first satellite, in one embodiment, the determining the first time offset between the first satellite and the second satellite includes:
determining a first transmission timestamp of the first message and/or a second transmission timestamp of the second message based on the transmission timestamp of the first message and/or the transmission timestamp of the second message;
determining the first time offset between the first satellite and the second satellite based on at least one of:
   the first transmission timestamp and a corresponding reception timestamp;
   the second transmission timestamp and a corresponding reception timestamp;
   a first error correction value.

Here, the first satellite determines, from the transmission timestamps of the first message and/or the second message, the first transmission timestamp of the first message and/or the second transmission timestamp of the second message that meet the conditions. The conditions include at least that the first transmission timestamp and the second transmission timestamp are the same, closest, or approximately equal, and can also include: the difference between the first transmission timestamp and its corresponding reception timestamp, and the difference between the second transmission timestamp and its corresponding reception timestamp, are relatively close or approximately equal.

For example, when both the first message and the second message are periodic messages, if the transmission time of the second message and the transmission time of the first message are the same within the same period, for each period, determine the first transmission timestamp from the transmission timestamps of the first message, and/or determine the second transmission timestamp from the transmission timestamps of the second message; if the transmission time of the second message and the transmission time of the first message are different within the same period, for each period, determine the first transmission timestamp and the second transmission timestamp whose transmission timestamps are closest or approximately equal from the transmission timestamps of the first message and the transmission timestamps of the second message.

When the first transmission timestamp of the first message is determined, determine the reception timestamp corresponding to the first transmission timestamp of the first message based on the transmission timestamp and the corresponding reception timestamp of the first message; when the second transmission timestamp of the second message is determined, determine the reception timestamp corresponding to the second transmission timestamp of the second message based on the transmission timestamp and the corresponding reception timestamp of the second message.

After the first satellite determines the reception timestamp corresponding to the first transmission timestamp of the first message and the reception timestamp corresponding to the second transmission timestamp of the second message, determine the first time offset between the first satellite and the corresponding second satellite using Method One, Two, Three, or Four.

### Method One:

Determine the first time offset between the first satellite and the corresponding second satellite based on the first transmission timestamp of the first message and its corresponding reception timestamp, or based on the second transmission timestamp of the second message and its corresponding reception timestamp.

For example, determine the first time offset between the first satellite and the corresponding second satellite based on the difference or absolute value of the difference between the first transmission timestamp of the first message and its corresponding reception timestamp.

For another example, determine the first time offset between the first satellite and the corresponding second satellite based on the difference or absolute value of the difference between the second transmission timestamp of the second message and its corresponding reception timestamp.

### Method Two:

Determine the first time offset between the first satellite and the corresponding second satellite based on the first transmission timestamp of the first message and its corresponding reception timestamp, and the first error correction value; or, based on the second transmission timestamp of the second message and its corresponding reception timestamp, and the first error correction value.

It should be noted that the first error correction value is used to compensate for errors caused by the time consumed by internal data processing of the first satellite.

### Method Three:

Determine the first time offset between the first satellite and the corresponding second satellite based on the first transmission timestamp of the first message and its corresponding reception timestamp, and the second transmission timestamp of the second message and its corresponding reception timestamp.

For example, determine a first absolute value of the difference between the second transmission timestamp and its corresponding reception timestamp, and determine a second absolute value of the difference between the first transmission timestamp and its corresponding reception timestamp; subtract the second absolute value from the first absolute value to obtain an absolute difference value; divide this absolute difference value by 2 to obtain the first time offset between the first satellite and the corresponding second satellite.

For another example, since the reception timestamp of the same message is greater than its corresponding transmission timestamp, the first satellite can subtract the difference between the reception timestamp corresponding to the second transmission timestamp and the second transmission timestamp from the difference between the reception timestamp corresponding to the first transmission timestamp and the first transmission timestamp to obtain a fifth difference value; divide the fifth difference value by 2 to obtain the first time offset between the first satellite and the corresponding second satellite.

In practical application, when the first satellite is satellite A and the second satellite is satellite B, use the formula [(*T*_{*reA*1} - *T*_{*sendB*1}) - (*T*_{*reB*1} - *T*_{*sendA*1})]/ 2 to calculate the first time offset between the first satellite and the corresponding second satellite. *T*_{*sendA*1} is the first transmission timestamp of the first message, *T*_{*reB*1} is the reception timestamp corresponding to the first transmission timestamp of the first message; *T*_{*sendB*1} is the second transmission timestamp of the second message, *T*_{*reA*1} is the reception timestamp corresponding to the second transmission timestamp of the second message.

### Method Four:

Determine the first time offset between the first satellite and the corresponding second satellite based on the reception timestamp corresponding to the first transmission timestamp, the second transmission timestamp and its corresponding reception timestamp, and based on the first error correction value.

For example, determine a first absolute value of the difference between the second transmission timestamp and its corresponding reception timestamp, and determine a second absolute value of the difference between the first transmission timestamp and its corresponding reception timestamp; subtract the second absolute value from the first absolute value to obtain an absolute difference value; divide this absolute difference value by 2 to obtain the mean of the absolute values; add the mean of the absolute values to the first error correction value to obtain the first time offset between the first satellite and the corresponding second satellite.

For another example, considering that the reception timestamp of the same message is greater than its corresponding transmission timestamp, the first satellite can subtract the difference between the reception timestamp corresponding to the first transmission timestamp and the first transmission timestamp from the difference between the reception timestamp corresponding to the second transmission timestamp and the second transmission timestamp to obtain a fifth difference value; divide the fifth difference value by 2 to obtain the mean of the fifth difference value; add the mean of the fifth difference value to the first error correction value to obtain the first time offset between the first satellite and the corresponding second satellite.

In practical application, when the first satellite is satellite A and the second satellite is satellite B, use the formula [(*T*_{*reA*1} - *T*_{*sendB*1}) - (*T*_{*reB*1} - *T*_{*sendA*1})]/ 2 + *γ*₁ to calculate the first time offset between the first satellite and the corresponding second satellite. *γ*₁ is the first error correction value. The first error correction value can be a set value or set according to actual conditions.

Considering that satellite motion may cause changes in the transmission delay between the first satellite and the second satellite, thereby introducing time errors, to improve the accuracy of the first time offset determined by the first satellite, in one embodiment, the first transmission timestamp and the second transmission timestamp are identical; or,
the difference between the first transmission timestamp and the second transmission timestamp is the minimum value among third difference values; where the third difference values are differences between transmission timestamps of the first message and transmission timestamps of the second message.

Here, the first satellite selects the same first transmission timestamp and second transmission timestamp from the transmission timestamps of the first message and the transmission timestamps of the second message, or selects the first transmission timestamp and second transmission timestamp with the smallest third difference value.

The first satellite and the second satellite having a connection relationship can be located on the same orbit. In one embodiment, the first satellite and the at least one second satellite are located in a same orbit, and the at least one second satellite is adjacent to the first satellite.

Here, the first satellite can periodically broadcast the first message and receive the second message periodically broadcast by the second satellite. The same second satellite can be located before or after the first satellite.

The first satellite and the second satellite having a connection relationship can be located on different orbits. In one embodiment, the first satellite and the at least one second satellite are located in different orbits; where the first message and the second message are both transmitted during the establishment of a connection between the first satellite and the corresponding second satellite.

When the first satellite is equipped with a GNSS receiver, the local time of the first satellite tracks the GNSS time. Based on this, in one embodiment, the method further includes:
receiving a GNSS time;
updating the local time of the first satellite based on the GNSS time.

Here, the first satellite can receive the GNSS time through the GNSS receiver of the first satellite, and update the local time of the first satellite based on the GNSS time, so that the local time of the first satellite tracks the GNSS time.

When the first satellite is not equipped with a GNSS receiver, it maintains the local time according to the local time frequency. Based on this, in one embodiment, the method further includes:
when the first satellite fails to receive the GNSS time, maintaining the local time of the first satellite according to a local time frequency.

Here, the local time of the first satellite is updated according to the local time frequency.

Correspondingly, embodiments of the present disclosure also provide an inter-satellite time synchronization method applied to a second satellite. As shown in FIG. 2, the method includes:
Step 201: receiving a first message sent by at least one first satellite.
where the first message carries a transmission timestamp.

Here, when the second satellite receives the first message, it can record the reception timestamp of the first message; it can also associatively record or store the reception timestamp of the first message and the transmission timestamp carried by the first message. The second satellite has a connection relationship with the first satellite; the number of first satellites having a connection relationship with the second satellite is greater than or equal to 1. That is, the second satellite and the first satellite interact only when a connection relationship exists.

Step 202: transmitting first information and/or a second message to the at least one first satellite.

Here, as described above, the first information represents related information of the first message. The second message may or may not carry related information of the first message.

It should be noted that the second satellite can transmit the second message and the first information corresponding to the first message to the first satellite in parallel.

In one embodiment, the first information includes a first difference value and/or a reception timestamp of the first message; where the first difference value presents a difference between the reception timestamp and a corresponding transmission timestamp of the first message.

Here, the second satellite determines the first difference value corresponding to the first message based on the reception timestamp of the first message and the transmission timestamp carried by the first message, and generates the first information corresponding to the first message based on this first difference value and/or the reception timestamp of the first message.

In one embodiment, the second message carries a transmission timestamp.

The transmission timestamp of the second message is used by the first satellite to determine the first time offset between the first satellite and the second satellite.

In one embodiment, the first message and the second message are both periodic messages.

The second satellite can obtain the transmission period of the first message from the first satellite. The transmission period of the second message and the transmission period of the first message can be the same or different.

Since the second satellite can record the transmission timestamp and reception timestamp of each first message, to facilitate the second satellite performing time synchronization, the first satellite can return the reception timestamp and/or the second difference value corresponding to the second message sent by the second satellite to the second satellite. Based on this, in one embodiment, the method further includes:
receiving second information sent by the first satellite; where,
the second information includes a second difference value and/or a reception timestamp of the second message; where the second difference value presents a difference between the reception timestamp and a corresponding transmission timestamp of the second message.

Here, the second satellite can associatively record or store the transmission timestamp and the corresponding reception timestamp of each second message. The second satellite can determine the reception timestamp of the second message based on the second difference value contained in the second information and the transmission timestamp of the second message.

When the second satellite performs time synchronization, the second satellite can adjust or calibrate the local time of the second satellite based on the second time offset between the second satellite and the first satellite, to improve the accuracy of the local time of the second satellite, keeping the second satellite and the first satellite time-synchronized. Based on this, in one embodiment, the method further includes one of:
adjusting or calibrating the local time of the second satellite based on the second time offset between the second satellite and the first satellite;
when the number of first satellites is greater than or equal to 2, adjusting or calibrating the local time of the second satellite based on the mean or weighted average of second time offsets between the second satellite and different first satellites.
where the second time offset is determined at least based on related information of the first message sent by the first satellite and related information of the second message.

Here, the second satellite determines the second time offset between the second satellite and the corresponding first satellite based on related information of the second message and related information of the first message sent by the first satellite. The related information of the first message includes the transmission timestamp of the first message and the first information; the related information of the second message includes the transmission timestamp of the second message and the second information. The first information corresponds one-to-one with the first message, and the second information corresponds one-to-one with the second message.

When the number of first satellites having a connection relationship with the second satellite is 1, adjust or calibrate the local time of the second satellite based on the second time offset between the second satellite and the first satellite.

When the number of first satellites having a connection relationship with the second satellite is greater than or equal to 2, determine the mean or weighted average of the second time offsets based on the second time offsets between the second satellite and different first satellites; adjust or calibrate the local time of the second satellite based on the determined mean or weighted average. The different first satellites can be some or all of the first satellites having a connection relationship with the second satellite.

Before performing time synchronization, the second satellite needs to first determine the second time offset between the second satellite and the first satellite. Based on this, in one embodiment, the method further includes:
determining the second time offset between the second satellite and the first satellite at least based on the transmission timestamp and/or a corresponding reception timestamp of the first message, and the transmission timestamp and/or a corresponding reception timestamp of the second message.

Here, the second satellite obtains the transmission timestamp and the corresponding reception timestamp of the first message; determines the transmission timestamp and the corresponding reception timestamp of the second message based on the transmission timestamp of the second message and the corresponding second information; determines the second time offset between the second satellite and the corresponding first satellite at least based on the transmission timestamp and the corresponding reception timestamp of the first message, and based on the transmission timestamp and the corresponding reception timestamp of the second message; the corresponding first satellite refers to the first satellite that sent the first message. At this time, the first message and the second message can be periodic or non-periodic messages.

Of course, when both the first message and the second message are periodic messages, and the transmission period of the second message is the same as the transmission period of the first message, if the transmission time of the second message and the transmission time of the first message are the same within the same period, the second satellite can determine the first time offset between the second satellite and the first satellite at least based on the transmission timestamp of the second message and the reception timestamp of the first message; if the transmission time of the second message and the transmission time of the first message are the same within the same period, and the second satellite obtains the reception timestamp of the second message, the second satellite can also determine the first time offset between the second satellite and the first satellite at least based on the transmission timestamp of the first message and the reception timestamp of the second message; if the transmission time of the second message and the transmission time of the first message are different within the same period, the second satellite can determine the first time offset between the second satellite and the first satellite at least based on the transmission timestamp of the second message and the transmission timestamp of the first message.

To improve the accuracy of the second time offset determined by the second satellite, in one embodiment, the determining the second time offset between the second satellite and the first satellite includes:
determining a third transmission timestamp of the first message and/or a fourth transmission timestamp of the second message based on the transmission timestamp of the first message and/or the transmission timestamp of the second message;
determining the second time offset between the second satellite and the first satellite based on at least one of:
   the third transmission timestamp and a corresponding reception timestamp;
   the fourth transmission timestamp and a corresponding reception timestamp;
   a second error correction value.

Here, the second satellite determines, from the transmission timestamps of the first message and/or the second message, the third transmission timestamp of the first message and/or the fourth transmission timestamp of the second message that meet the conditions. The conditions include at least that the third transmission timestamp and the fourth transmission timestamp are the same, closest, or approximately equal, and can also include: the difference between the third transmission timestamp and its corresponding reception timestamp, and the difference between the fourth transmission timestamp and its corresponding reception timestamp, are relatively close or approximately equal.

For example, when both the first message and the second message are periodic messages, if the transmission time of the second message and the transmission time of the first message are the same within the same period, for each period, determine the third transmission timestamp from the transmission timestamps of the first message, and/or determine the fourth transmission timestamp from the transmission timestamps of the second message; if the transmission time of the second message and the transmission time of the first message are different within the same period, for each period, determine the third transmission timestamp and the fourth transmission timestamp whose transmission timestamps are closest or approximately equal from the transmission timestamps of the first message and the transmission timestamps of the second message.

When the third transmission timestamp of the first message is determined, determine the reception timestamp corresponding to the third transmission timestamp of the first message based on the transmission timestamp and the corresponding reception timestamp of the first message; when the fourth transmission timestamp of the second message is determined, determine the reception timestamp corresponding to the fourth transmission timestamp of the second message based on the transmission timestamp and the corresponding reception timestamp of the second message.

After the second satellite determines the reception timestamp corresponding to the third transmission timestamp of the first message and the reception timestamp corresponding to the fourth transmission timestamp of the second message, determine the first time offset between the second satellite and the first satellite using Method One, Two, Three, or Four.

### Method One:

Determine the first time offset between the second satellite and the corresponding first satellite based on the third transmission timestamp of the first message and its corresponding reception timestamp, or based on the fourth transmission timestamp of the second message and its corresponding reception timestamp.

For example, determine the first time offset between the second satellite and the corresponding first satellite based on the difference or absolute value of the difference between the third transmission timestamp of the first message and its corresponding reception timestamp.

For another example, determine the first time offset between the second satellite and the corresponding first satellite based on the difference or absolute value of the difference between the fourth transmission timestamp of the second message and its corresponding reception timestamp.

### Method Two:

Determine the first time offset between the first satellite and the corresponding second satellite based on the third transmission timestamp of the first message and its corresponding reception timestamp, and the second error correction value; or, based on the fourth transmission timestamp of the second message and its corresponding reception timestamp, and the second error correction value.

It should be noted that the second error correction value is used to compensate for errors caused by the time consumed by internal data processing of the second satellite. The second error correction value can be the same as or different from the first error correction value.

### Method Three:

Determine the second time offset between the second satellite and the corresponding first satellite based on the third transmission timestamp of the first message and its corresponding reception timestamp, and the fourth transmission timestamp of the second message and its corresponding reception timestamp.

For example, determine a third absolute value of the difference between the fourth transmission timestamp and its corresponding reception timestamp, and determine a fourth absolute value of the difference between the third transmission timestamp and its corresponding reception timestamp; subtract the fourth absolute value from the third absolute value to obtain an absolute difference value; divide this absolute difference value by 2 to obtain the second time offset between the second satellite and the corresponding first satellite.

For another example, since the reception timestamp of the same message is greater than its corresponding transmission timestamp, the second satellite can subtract the difference between the reception timestamp corresponding to the third transmission timestamp and the third transmission timestamp from the difference between the reception timestamp corresponding to the fourth transmission timestamp and the fourth transmission timestamp to obtain a sixth difference value; divide the sixth difference value by 2 to obtain the second time offset between the second satellite and the corresponding first satellite.

In practical application, when the first satellite is satellite A and the second satellite is satellite B, use the formula [(*T*_{*reA*2} - *T*_{*sendB*2}) - (*T*_{*reB*2} - *T*_{*sendA*2})]/ 2 to calculate the second time offset between the second satellite and the corresponding first satellite. *T*_{*sendA*2} is the third transmission timestamp of the first message, *T*_{*reB*2} is the reception timestamp corresponding to the third transmission timestamp of the first message; *T*_{*sendB*2} is the fourth transmission timestamp of the second message, *T*_{*reA*2} is the reception timestamp corresponding to the fourth transmission timestamp of the second message.

### Method Four:

Determine the first time offset between the first satellite and the corresponding second satellite based on the third transmission timestamp of the first message and its corresponding reception timestamp, the fourth transmission timestamp of the second message and its corresponding reception timestamp, and based on the second error correction value.

For example, determine a third absolute value of the difference between the fourth transmission timestamp and its corresponding reception timestamp, and determine a fourth absolute value of the difference between the third transmission timestamp and its corresponding reception timestamp; subtract the fourth absolute value from the third absolute value to obtain an absolute difference value; divide this absolute difference value by 2 to obtain the mean of the absolute values; add the mean of the absolute values to the second error correction value to obtain the second time offset between the second satellite and the corresponding first satellite.

For another example, considering that the reception timestamp of the same message is greater than its corresponding transmission timestamp, the second satellite can subtract the difference between the reception timestamp corresponding to the third transmission timestamp and the third transmission timestamp from the difference between the reception timestamp corresponding to the fourth transmission timestamp and the fourth transmission timestamp to obtain a sixth difference value; divide the sixth difference value by 2 to obtain the mean of the sixth difference value; add the mean of the sixth difference value to the second error correction value to obtain the second time offset between the second satellite and the corresponding first satellite.

In practical application, when the first satellite is satellite A and the second satellite is satellite B, use the formula [(*T*_{*reA*2} - *T*_{*sendB*2}) - (*T*_{*reB*2} *- T*_{*sendA*2})]/ 2 *+ γ*₂ to calculate the first time offset between the first satellite and the corresponding second satellite. *γ*₂ is the second error correction value. The second error correction value can be a set value or set according to actual conditions.

To improve the accuracy of the determined second time offset, in one embodiment,
the third transmission timestamp and the fourth transmission timestamp are identical; or,
the difference between the third transmission timestamp and the fourth transmission timestamp is the minimum value among fourth difference values; where the fourth difference values are differences between transmission timestamps of the first message and transmission timestamps of the second message.

Here, the second satellite selects the same third transmission timestamp and fourth transmission timestamp from the transmission timestamps of the first message and the transmission timestamps of the second message, or selects the third transmission timestamp and fourth transmission timestamp with the smallest fourth difference value.

The first satellite and the second satellite having a connection relationship can be located on the same orbit. In one embodiment, the at least one first satellite and the second satellite are located in a same orbit, and the second satellite is adjacent to the at least one first satellite.

Here, the second satellite can periodically broadcast the second message and receive the first message periodically broadcast by the first satellite. The same first satellite can be located before or after the second satellite.

The second satellite and the first satellite having a connection relationship can be located on different orbits. In one embodiment, the at least one first satellite and the second satellite are located in different orbits; where the second message and the first message are both transmitted during the establishment of a connection between the second satellite and the corresponding first satellite.

When the second satellite is equipped with a GNSS receiver, the local time of the second satellite tracks the GNSS time. In one embodiment, the method further includes:
receiving a GNSS time;
updating the local time of the second satellite based on the GNSS time.

Here, the second satellite can receive the GNSS time through the GNSS receiver of the second satellite, and update the local time of the second satellite based on the GNSS time, so that the local time of the second satellite tracks the GNSS time.

When the second satellite is not equipped with a GNSS receiver, it maintains the local time according to the local time frequency. Based on this, in one embodiment, the method further includes:
when the second satellite fails to receive the GNSS time, maintaining the local time of the second satellite according to a local time frequency.

Here, the local time of the second satellite is updated according to the local time frequency.

Below, combined with application examples, the present disclosure is described in further detail.

For satellites located in the same orbit, each satellite periodically performs time synchronization with satellites located before and after it. The specific implementation process is as follows in steps 1 to 4. For satellites located in different orbits, satellites interact and perform time synchronization according to steps 1 to 4 during the period when a connection is established.

Step 1: each satellite periodically transmits a first message to satellites with which it has a connection relationship. The first message carries a transmission timestamp *T_{send}*, and the peer satellite records the reception timestamp *Tᵣₑ* of the first message upon receiving it. At the same time, the peer satellite also periodically transmits a second message to this satellite. Similarly, the second message carries a transmission timestamp.

For example, as shown in FIG. 3, satellite A has a connection relationship with satellite B and satellite C. Satellite A transmits a first message to satellite B and satellite C respectively. The first message carries the transmission timestamp *T_{sendA}* of the first message; satellite B records the reception timestamp *T_{reB}* of the first message upon receiving it; satellite C records the reception timestamp *T_{reC}* of the first message upon receiving it.

Satellite B transmits a second message to satellite A. The second message carries the transmission timestamp *T_{sendB}* of the second message; satellite A records the reception timestamp *T_{reA-B}* of this second message upon receiving it.

Satellite C transmits a second message to satellite A. The second message carries the transmission timestamp *T_{sendC}* of the second message; satellite A records the reception timestamp *T_{reA-C}* of this second message upon receiving it.

Step 2: Each satellite, upon receiving any message, records the reception timestamp *Tᵣₑ* of the message, and transmits (*Tᵣₑ* - *T_{send}*) and/or *Tᵣₑ* of the message to the sender of the message (here, *T_{send}* and *Tᵣₑ* of the message can also be sent; in short, (*Tᵣₑ - T_{send}*) and *Tᵣₑ* can be derived). In this way, each satellite can obtain the (*Tᵣₑ* - *T_{send}*) of the first message and the (*Tᵣₑ* - *T_{send}*) of the second message.

For example, in FIG. 3, for the second message sent by satellite B to satellite A, satellite A can calculate (*T_{reA-B}* - *T_{sendB}*), and transmit (*T_{reA-B}* - *T_{sendB}*) and/or *T_{reA-B}* to satellite B. For the second message sent by satellite C to satellite A, satellite A can calculate (*T_{reA-C}* - *T_{sendC}*)*,* and transmit (*T_{reA-C} - T_{sendC}*) and/or *T_{reA-C}* to satellite C.

For another example, for the first message sent by satellite A to satellite B, satellite B can calculate (*T_{reB}* - *T_{sendA}*), and transmit (*T_{reB} - T_{sendA}*) and/or *T_{reB}* to satellite A.

For another example, for the first message sent by satellite A to satellite C, satellite C can calculate (*T_{reC} - T_{sendA}*)*,* and transmit (*T_{reC} - T_{sendA}*) and/or *T_{reC}* to satellite A.

Step 3: Each satellite calculates the time offset (offset) between itself and the peer satellite based on the (*Tᵣₑ - T_{send}*) of the first message and the $T_1$ and (*Tᵣₑ - T_{send}*) of the second message.

In FIG. 3, satellite A can calculate the time offset between satellite A and satellite B based on (*T_{reA-B} - T_{sendB}*) and (*T_{reB} - T_{sendA}*); satellite A can calculate the time offset between satellite A and satellite C based on (*T_{reA-C} - T_{sendC}*) and (*T_{reC} - T_{sendA}*). Satellite B can calculate the time offset between satellite B and satellite A based on (*T_{reB} - T_{sendA}*) and (*T_{reA-B} - T_{sendB}*)*.* Satellite C can calculate the time offset between satellite C and satellite A based on (*T_{reC} - T_{sendA}*) and (*T_{reA-C} - T_{sendC}*).

In practical application, use the following formula to calculate the time offset between itself and the peer satellite.

[(*Tᵣₑ* - *T_{send}*) of first message and (*Tᵣₑ - T_{send}*) of second message]/2+error correction value

Where, the (*Tᵣₑ* - *T_{send}*) of the first message and the (*Tᵣₑ* - *T_{send}*) of the second message used to calculate the time offset are obtained by the following method:
Select the *T_{send}* of the first message and the *T_{send}* of the second message that meet the set conditions from the transmission timestamps of the first message and the transmission timestamps of the second message. For example, select the *T_{send}* of the first message and the *T_{send}* of the second message that have the same time; or, based on the difference between the transmission timestamps of the first message and the transmission timestamps of the second message, select the *T_{send}* of the first message and the *T_{send}* of the second message with the smallest difference.

For example, when satellite B calculates the time offset between satellite B and satellite A, the *T_{sendB}* of the second message sent by satellite B and the *T_{sendA}* of the first message sent by satellite A are the same, or the difference between *T_{sendB}* and *T_{sendA}* is minimal among relevant timestamps.

Step 4: each satellite adjusts or calibrates its local time based on the determined time offset.

When a satellite has a connection relationship with only one satellite, the satellite adjusts or calibrates its local time based on the time offset between itself and that one satellite.

When a satellite has a connection relationship with at least two satellites, the satellite determines the time offsets between itself and the different satellites, and adjusts or calibrates its local time based on the mean or weighted average of these time offsets.

For example, in FIG. 3, both satellite B and satellite C have only one connected satellite, satellite A. Therefore, satellite B adjusts its local time based on the time offset between satellite B and satellite A; satellite C adjusts its local time based on the time offset between satellite C and satellite A.

For another example, in FIG. 3, both satellite B and satellite C are connected to satellite A. Satellite A calculates the mean or weighted average based on the time offset between satellite A and satellite B and the time offset between satellite A and satellite C; adjusts the local time of satellite A based on this mean or weighted average.

Step 5: some satellites in the networked satellites may be equipped with GNSS receivers to receive GNSS time; the local time of satellites receiving GNSS time tracks the GNSS time. The time offsets obtained according to steps 1 to 3 are used to adjust or calibrate the local time.

Step 6: for satellites without GNSS receivers, maintain the satellite's local time according to the local time frequency. The time offsets obtained according to steps 1 to 3 are used to periodically adjust or calibrate the local time.

After obtaining these error values from surrounding satellites, each satellite adjusts its local value by weighting and averaging all error values.

In the inter-satellite time synchronization method, apparatus, satellite, and storage medium provided by the embodiments of the present disclosure, the first satellite transmits a first message to at least one second satellite; the first message carries a transmission timestamp; the second satellite receives the first message sent by at least one first satellite, and transmits first information and/or a second message to the at least one first satellite; the first satellite receives the first information and/or the second message sent by the at least one second satellite. In the above embodiment, the first message and the second message are transmitted in parallel, which can avoid changes in transmission delay caused by multiple serial interactions or multiple handshakes consuming a large amount of time, so that the first satellite and/or the second satellite can obtain accurate time synchronization information when performing time synchronization, improving the accuracy of the time synchronization information. There is no master-slave relationship between the first satellite and the second satellite, solving the problems of unstable satellite networking topology and the inability to establish long-term master-slave synchronization.

To implement the inter-satellite time synchronization method of the embodiments of the present disclosure, embodiments of the present disclosure also provide an inter-satellite time synchronization apparatus, disposed on a first satellite. As shown in FIG. 4, the apparatus includes:
a first transmitting unit 401, configured to transmit a first message to at least one second satellite; where the first message carries a transmission timestamp;
a first receiving unit 402, configured to receive first information and/or a second message sent by the at least one second satellite.

In one embodiment, the first information includes a first difference value and/or a reception timestamp of the first message; where the first difference value presents a difference between the reception timestamp and a corresponding transmission timestamp of the first message.

In one embodiment, the second message carries a transmission timestamp.

In one embodiment, the apparatus further includes:
a third transmitting unit, configured to transmit corresponding second information to the at least one second satellite; where the second information includes a second difference value and/or a reception timestamp of the second message; where the second difference value presents a difference between the reception timestamp and a corresponding transmission timestamp of the second message.

In one embodiment, the apparatus further includes a first processing unit, configured to perform one of:
adjusting or calibrating a local time of the first satellite based on a first time offset between the first satellite and the second satellite;
when a number of second satellites is greater than or equal to 2, adjusting or calibrating the local time of the first satellite based on a mean or weighted average of first time offsets between the first satellite and different second satellites.

In one embodiment, the apparatus further includes:
a first determining unit, configured to determine the first time offset between the first satellite and the second satellite at least based on the transmission timestamp and/or a corresponding reception timestamp of the first message, and the transmission timestamp and/or a corresponding reception timestamp of the second message.

In one embodiment, the first determining unit is specifically configured to:
determine a first transmission timestamp of the first message and/or a second transmission timestamp of the second message based on the transmission timestamp of the first message and/or the transmission timestamp of the second message;
determine the first time offset between the first satellite and the second satellite based on at least one of:
   the first transmission timestamp and a corresponding reception timestamp;
   the second transmission timestamp and a corresponding reception timestamp;
   a first error correction value.

In one embodiment, the first transmission timestamp and the second transmission timestamp are identical; or,
a difference between the first transmission timestamp and the second transmission timestamp is a minimum value among third difference values; where the third difference values are differences between transmission timestamps of the first message and transmission timestamps of the second message.

In one embodiment, the first message and the second message are both periodic messages.

In one embodiment, the first satellite and the at least one second satellite are located in a same orbit, and the at least one second satellite is adjacent to the first satellite.

In one embodiment, the first satellite and the at least one second satellite are located in different orbits; where the first message and the second message are both transmitted during an establishment of a connection between the first satellite and a corresponding second satellite.

In one embodiment, the apparatus further includes:
a third receiving unit, configured to receive a GNSS time;
a first updating unit, configured to update the local time of the first satellite based on the GNSS time.

In one embodiment, the apparatus further includes:
a second updating unit, configured to maintain the local time of the first satellite according to a local time frequency when the first satellite fails to receive the GNSS time.

In practical application, the first transmitting unit 401, the first receiving unit 402, the third transmitting unit, and the third receiving unit can be implemented by a processor in the inter-satellite time synchronization apparatus combined with a communication interface; the first processing unit, the first determining unit, the first updating unit, and the second updating unit can be implemented by a processor in the inter-satellite time synchronization apparatus.

It should be noted: When the inter-satellite time synchronization apparatus described above performs inter-satellite time synchronization, the division of the above program modules is only for illustrative purposes. In practical applications, the above processing can be assigned to different program modules as needed, that is, the internal structure of the apparatus is divided into different program modules to complete all or part of the processing described above. In addition, the inter-satellite time synchronization apparatus described in the above embodiments and the inter-satellite time synchronization method embodiments belong to the same concept. For specific implementation processes, please refer to the method embodiments, which will not be repeated here.

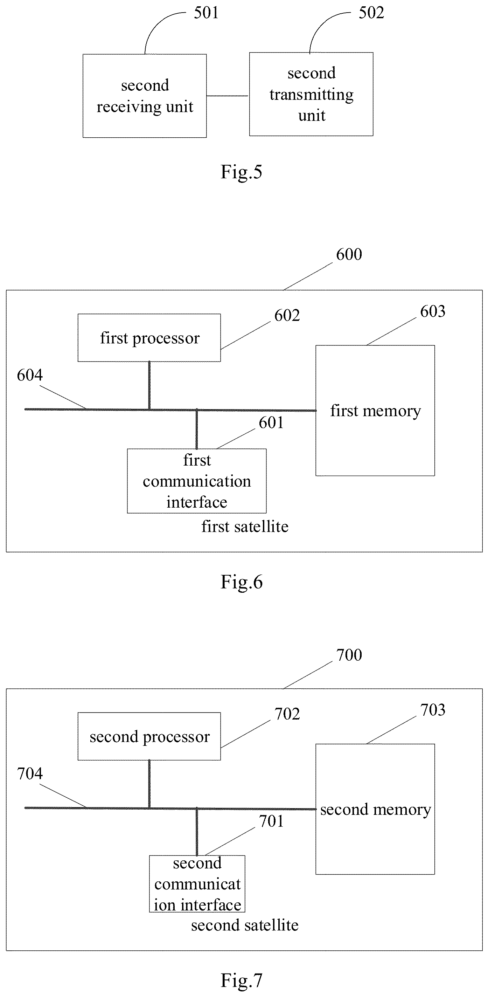

To implement the inter-satellite time synchronization method of the embodiments of the present disclosure, embodiments of the present disclosure also provide an inter-satellite time synchronization apparatus, disposed on a second satellite. As shown in FIG. 5, the apparatus includes:
a second receiving unit 501, configured to receive a first message sent by at least one first satellite; where the first message carries a transmission timestamp;
a second transmitting unit 502, configured to transmit first information and/or a second message to the at least one first satellite.

In one embodiment, the first information includes a first difference value and/or a reception timestamp of the first message; where the first difference value presents a difference between the reception timestamp and a corresponding transmission timestamp of the first message.

In one embodiment, the second message carries a transmission timestamp; where the second satellite has a connection relationship with the first satellite.

In one embodiment, the apparatus further includes:
a fourth receiving unit, configured to receive second information sent by the first satellite; where
the second information includes a second difference value and/or a reception timestamp of the second message; where the second difference value presents a difference between the reception timestamp and a corresponding transmission timestamp of the second message.

In one embodiment, the apparatus further includes a second processing unit, configured to perform one of:
adjusting or calibrating a local time of the second satellite based on a second time offset between the second satellite and the first satellite;
when a number of first satellites is greater than or equal to 2, adjusting or calibrating the local time of the second satellite based on a mean or weighted average of second time offsets between the second satellite and different first satellites.

In one embodiment, the apparatus further includes:
a second determining unit, configured to determine the second time offset between the second satellite and the first satellite at least based on the transmission timestamp and/or a corresponding reception timestamp of the first message, and the transmission timestamp and/or a corresponding reception timestamp of the second message.

In one embodiment, the second determining unit is specifically configured to:
determine a third transmission timestamp of the first message and/or a fourth transmission timestamp of the second message based on the transmission timestamp of the first message and/or the transmission timestamp of the second message;
determine the second time offset between the second satellite and the first satellite based on at least one of:
   the third transmission timestamp and a corresponding reception timestamp;
   the fourth transmission timestamp and a corresponding reception timestamp;
   a second error correction value.

In one embodiment, the third transmission timestamp and the fourth transmission timestamp are identical; or,
a difference between the third transmission timestamp and the fourth transmission timestamp is a minimum value among fourth difference values; where the fourth difference values are differences between transmission timestamps of the first message and transmission timestamps of the second message.

In one embodiment, the first message and the second message are both periodic messages.

In one embodiment, the at least one first satellite and the second satellite are located in a same orbit, and the second satellite is adjacent to the at least one first satellite.

In one embodiment, the at least one first satellite and the second satellite are located in different orbits; where the second message and the first message are both transmitted during an establishment of a connection between the second satellite and a corresponding first satellite.

In one embodiment, the apparatus further includes:
a fourth receiving unit, configured to receive a GNSS time;
a third updating unit, configured to update the local time of the second satellite based on the GNSS time.

In one embodiment, the apparatus further includes:
a fourth updating unit, configured to maintain the local time of the second satellite according to a local time frequency when the second satellite fails to receive the GNSS time.

In practical application, the second receiving unit 501, the second transmitting unit 502, the fourth receiving unit, and the fourth receiving unit can be implemented by a processor in the inter-satellite time synchronization apparatus combined with a communication interface; the second processing unit, the second determining unit, the third updating unit, and the fourth updating unit can be implemented by a processor in the inter-satellite time synchronization apparatus.

It should be noted: When the inter-satellite time synchronization apparatus described above performs inter-satellite time synchronization, the division of the above program modules is only for illustrative purposes. In practical applications, the above processing can be assigned to different program modules as needed, that is, the internal structure of the apparatus is divided into different program modules to complete all or part of the processing described above. In addition, the inter-satellite time synchronization apparatus described in the above embodiments and the inter-satellite time synchronization method embodiments belong to the same concept. For specific implementation processes, please refer to the method embodiments, which will not be repeated here.

Based on the hardware implementation of the above program modules and to implement the method on the first satellite side of the present disclosure, embodiments of the present disclosure also provide a first satellite. As shown in FIG. 6, the first satellite 600 includes:
a first communication interface 601, capable of exchanging information with other network nodes;
a first processor 602, connected to the first communication interface 601 to exchange information with other network nodes, configured to, when running a computer program, execute the method provided by one or more technical solutions on the first satellite side. The computer program is stored on a first memory 603.

Specifically, the first communication interface 601 is configured to transmit a first message to at least one second satellite, and receive first information and/or a second message sent by the at least one second satellite; where the first message carries a transmission timestamp.

In one embodiment, the first information includes a first difference value and/or a reception timestamp of the first message; where the first difference value presents a difference between the reception timestamp and a corresponding transmission timestamp of the first message.

In one embodiment, the second message carries a transmission timestamp.

In one embodiment, the first communication interface 601 is further configured to transmit corresponding second information to the at least one second satellite; where the second information includes a second difference value and/or a reception timestamp of the second message; where the second difference value presents a difference between the reception timestamp and a corresponding transmission timestamp of the second message.

In one embodiment, the first processor 602 is configured to perform one of:
adjusting or calibrating a local time of the first satellite based on a first time offset between the first satellite and the second satellite;
when a number of second satellites is greater than or equal to 2, adjusting or calibrating the local time of the first satellite based on a mean or weighted average of first time offsets between the first satellite and different second satellites.

In one embodiment, the first processor 602 is further configured to determine the first time offset between the first satellite and the second satellite at least based on the transmission timestamp and/or a corresponding reception timestamp of the first message, and the transmission timestamp and/or a corresponding reception timestamp of the second message.

In one embodiment, the first processor 602 is specifically configured to:
determine a first transmission timestamp of the first message and/or a second transmission timestamp of the second message based on the transmission timestamp of the first message and/or the transmission timestamp of the second message;
determine the first time offset between the first satellite and the second satellite based on at least one of:
   the first transmission timestamp and a corresponding reception timestamp;
   the second transmission timestamp and a corresponding reception timestamp;
   a first error correction value.

In one embodiment, the first transmission timestamp and the second transmission timestamp are identical; or,
a difference between the first transmission timestamp and the second transmission timestamp is a minimum value among third difference values; where the third difference values are differences between transmission timestamps of the first message and transmission timestamps of the second message.

In one embodiment, the first message and the second message are both periodic messages.

In one embodiment, the first satellite and the at least one second satellite are located in a same orbit, and the at least one second satellite is adjacent to the first satellite.

In one embodiment, the first satellite and the at least one second satellite are located in different orbits; where the first message and the second message are both transmitted during an establishment of a connection between the first satellite and a corresponding second satellite.

In one embodiment, the first communication interface 601 is further configured to receive a GNSS time;
the first processor 602 is further configured to update the local time of the first satellite based on the GNSS time.

In one embodiment, the first processor 602 is further configured to maintain the local time of the first satellite according to a local time frequency when the first satellite fails to receive the GNSS time.

It should be noted: The specific processing process of the first processor 602 and the first communication interface 601 can be understood by referring to the above method.

Of course, in practical application, various components in the first satellite 600 are coupled together through a bus system 604. It can be understood that the bus system 604 is used to implement connection communication between these components. The bus system 604 includes not only a data bus but also a power bus, a control bus, and a status signal bus. However, for clarity of illustration, various buses are labeled as the bus system 604 in FIG. 6.

The first memory 603 in the embodiments of the present disclosure is used to store various types of data to support the operation of the first satellite 600. Examples of these data include: any computer program operating on the first satellite 600.

The methods disclosed in the above embodiments of the present disclosure can be applied to the first processor 602 or implemented by the first processor 602. The first processor 602 may be an integrated circuit chip with signal processing capability. In the implementation process, the steps of the above methods can be completed by hardware integrated logic circuits in the first processor 602 or instructions in the form of software. The above first processor 602 may be a general-purpose processor, a digital signal processor (DSP), or other programmable logic devices, discrete gate or transistor logic devices, discrete hardware components, etc. The first processor 602 can implement or execute the methods, steps, and logic block diagrams disclosed in the embodiments of the present disclosure. A general-purpose processor may be a microprocessor or any conventional processor, etc. Combining the steps of the method disclosed in the embodiments of the present disclosure, it can be directly embodied as being executed and completed by a hardware decoding processor, or executed and completed by a combination of hardware and software modules in the decoding processor. The software module can be located in a storage medium, and the storage medium is located in the first memory 603. The first processor 602 reads information from the first memory 603 and completes the steps of the foregoing method in combination with its hardware.

In an exemplary embodiment, the first satellite 600 may be implemented by one or more application-specific integrated circuits (ASIC), DSP, programmable logic devices (PLD), complex programmable logic devices (CPLD), field-programmable gate arrays (FPGA), general-purpose processors, controllers, microcontrollers (MCU), microprocessors, or other electronic components, for executing the foregoing methods.

Based on the hardware implementation of the above program modules and to implement the method on the second satellite side of the present disclosure, embodiments of the present disclosure also provide a second satellite. As shown in FIG. 7, the second satellite 700 includes:
a second communication interface 701, capable of exchanging information with other network nodes;
a second processor 702, connected to the second communication interface 701 to exchange information with other network nodes, configured to, when running a computer program, execute the method provided by one or more technical solutions on the second satellite side. The computer program is stored on a second memory 703.

Specifically, the second communication interface 701 is configured to receive a first message sent by at least one first satellite, and transmit first information and a second message to the at least one first satellite; where the first message carries a transmission timestamp.

In one embodiment, the first information includes a first difference value and/or a reception timestamp of the first message; where the first difference value presents a difference between the reception timestamp and a corresponding transmission timestamp of the first message.

In one embodiment, the second message carries a transmission timestamp.

In one embodiment, the second communication interface 701 is further configured to receive second information sent by the first satellite; where,
the second information includes a second difference value and/or a reception timestamp of the second message; where the second difference value presents a difference between the reception timestamp and a corresponding transmission timestamp of the second message.

In one embodiment, the second processor 702 is configured to perform one of:
adjusting or calibrating a local time of the second satellite based on a second time offset between the second satellite and the first satellite;
when a number of first satellites is greater than or equal to 2, adjusting or calibrating the local time of the second satellite based on a mean or weighted average of second time offsets between the second satellite and different first satellites.

In one embodiment, the second processor 702 is further configured to determine the second time offset between the second satellite and the first satellite at least based on the transmission timestamp and/or a corresponding reception timestamp of the first message, and the transmission timestamp and/or a corresponding reception timestamp of the second message.

In one embodiment, the second processor 702 is specifically configured to:
determine a third transmission timestamp of the first message and/or a fourth transmission timestamp of the second message based on the transmission timestamp of the first message and/or the transmission timestamp of the second message;
determine the second time offset between the second satellite and the first satellite based on at least one of:
   the third transmission timestamp and a corresponding reception timestamp;
   the fourth transmission timestamp and a corresponding reception timestamp;
   a second error correction value.

In one embodiment, the third transmission timestamp and the fourth transmission timestamp are identical; or,
a difference between the third transmission timestamp and the fourth transmission timestamp is a minimum value among fourth difference values; where the fourth difference values are differences between transmission timestamps of the first message and transmission timestamps of the second message.

In one embodiment, the first message and the second message are both periodic messages.

In one embodiment, the at least one first satellite and the second satellite are located in a same orbit, and the second satellite is adjacent to the at least one first satellite.

In one embodiment, the at least one first satellite and the second satellite are located in different orbits; where the second message and the first message are both transmitted during an establishment of a connection between the second satellite and a corresponding first satellite.

In one embodiment, the apparatus further includes:
the second communication interface 701 is further configured to receive a GNSS time;
the second processor 702 is further configured to update the local time of the second satellite based on the GNSS time.

In one embodiment, the apparatus further includes:
the second processor 702 is further configured to maintain the local time of the second satellite according to a local time frequency when the second satellite fails to receive the GNSS time.

It should be noted: The specific processing process of the second processor 702 and the second communication interface 701 can be understood by referring to the above method.

Of course, in practical application, various components in the second satellite 700 are coupled together through a bus system 704. It can be understood that the bus system 704 is used to implement connection communication between these components. The bus system 704 includes not only a data bus but also a power bus, a control bus, and a status signal bus. However, for clarity of illustration, various buses are labeled as the bus system 704 in FIG. 7.

The second memory 703 in the embodiments of the present disclosure is used to store various types of data to support the operation of the second satellite 700. Examples of these data include: any computer program operating on the second satellite 700.

The methods disclosed in the above embodiments of the present disclosure can be applied to the second processor 702 or implemented by the second processor 702. The second processor 702 may be an integrated circuit chip with signal processing capability. In the implementation process, the steps of the above methods can be completed by hardware integrated logic circuits in the second processor 702 or instructions in the form of software. The above second processor 702 may be a general-purpose processor, DSP, or other programmable logic devices, discrete gate or transistor logic devices, discrete hardware components, etc. The second processor 702 can implement or execute the methods, steps, and logic block diagrams disclosed in the embodiments of the present disclosure. A general-purpose processor may be a microprocessor or any conventional processor, etc. Combining the steps of the method disclosed in the embodiments of the present disclosure, it can be directly embodied as being executed and completed by a hardware decoding processor, or executed and completed by a combination of hardware and software modules in the decoding processor. The software module can be located in a storage medium, and the storage medium is located in the second memory 703. The second processor 702 reads information from the second memory 703 and completes the steps of the foregoing method in combination with its hardware.

In an exemplary embodiment, the second satellite 700 may be implemented by one or more ASIC, DSP, PLD, CPLD, FPGA, general-purpose processors, controllers, MCU, microprocessors, or other electronic components, for executing the foregoing methods.

It can be understood that the memory (first memory 603, second memory 703) in the embodiments of the present disclosure may be volatile memory or non-volatile memory, or may include both volatile and non-volatile memory. Among them, non-volatile memory can be read-only memory (ROM), programmable read-only memory (PROM), erasable programmable read-only memory (EPROM), electrically erasable programmable read-only memory (EEPROM), ferromagnetic random access memory (FRAM), flash memory, magnetic surface memory, optical disk, or compact disc read-only memory (CD-ROM); magnetic surface memory can be magnetic disk memory or magnetic tape memory. Volatile memory can be random access memory (RAM), which is used as external cache. By way of example but not limitation, many forms of RAM are available, such as static random access memory (SRAM), synchronous static random access memory (SSRAM), dynamic random access memory (DRAM), synchronous dynamic random access memory (SDRAM), double data rate synchronous dynamic random access memory (DDR SDRAM), enhanced synchronous dynamic random access memory (ESDRAM), synchronous link dynamic random access memory (SLDRAM), and direct memory bus random access memory (DR RAM). The memory described in the embodiments of the present disclosure is intended to include, but is not limited to, these and any other suitable types of memory.

In an exemplary embodiment, embodiments of the present disclosure also provide a storage medium, namely a computer storage medium, specifically a computer-readable storage medium, for example, including the first memory 603 storing a computer program. The computer program can be executed by the first processor 602 of the first satellite 600 to perform the steps of the method on the first satellite side described above. For another example, including the second memory 703 storing a computer program, the computer program can be executed by the second processor 702 of the second satellite 700 to perform the steps of the method on the second satellite side described above. The computer-readable storage medium can be FRAM, ROM, PROM, EPROM, EEPROM, Flash Memory, magnetic surface memory, optical disk, or CD-ROM memory.

It should be noted: "First", "second", etc. are used to distinguish similar objects, and are not necessarily used to describe a specific order or sequence.

The term "and/or" herein is only an association relationship describing associated objects, indicating that three relationships may exist. For example, A and/or B may indicate: A exists alone, A and B exist simultaneously, and B exists alone. In addition, the term "at least one" herein means any one of multiple or any combination of at least two of multiple. For example, including at least one of A, B, C, may indicate including any one or more elements selected from the set consisting of A, B, and C.

In addition, the technical solutions recorded in the embodiments of the present disclosure can be combined arbitrarily without conflict.

The above are only preferred embodiments of the present disclosure and are not intended to limit the scope of protection of the present disclosure.

## Claims

1. A method for inter-satellite time synchronization, applied to a first satellite, comprising:
transmitting a first message to at least one second satellite, wherein the first message carries a transmission timestamp;
receiving first information and/or a second message sent by the at least one second satellite.

2. The method according to claim 1, wherein
the first information comprises a first difference value and/or a reception timestamp of the first message; and
the first difference value presents a difference between the reception timestamp and the corresponding transmission timestamp of the first message.

3. The method according to claim 1, wherein
the second message carries a transmission timestamp.

4. The method according to claim 1, further comprising:
transmitting corresponding second information to the at least one second satellite;
wherein the second information comprises a second difference value and/or a reception timestamp of the second message; and
the second difference value presents a difference between the reception timestamp and the corresponding transmission timestamp of the second message.

5. The method according to claim 1, further comprising one of:
adjusting or calibrating a local time of the first satellite based on a first time offset between the first satellite and the second satellite; or
when a number of second satellites is greater than or equal to 2, adjusting or calibrating a local time of the first satellite based on a mean or weighted average of first time offsets between the first satellite and different second satellites.

6. The method according to any one of claims 1 to 5, further comprising:
determining the first time offset between the first satellite and the second satellite at least based on the transmission timestamp and/or a corresponding reception timestamp of the first message, and the transmission timestamp and/or a corresponding reception timestamp of the second message.

7. The method according to claim 6, wherein the determining the first time offset comprises:
determining a first transmission timestamp of the first message and/or a second transmission timestamp of the second message based on the transmission timestamp of the first message and/or the transmission timestamp of the second message;
determining the first time offset between the first satellite and the second satellite based on at least one of:
the first transmission timestamp and a corresponding reception timestamp,
the second transmission timestamp and a corresponding reception timestamp, or
a first error correction value.

8. The method according to claim 7, wherein
the first transmission timestamp and the second transmission timestamp are identical; or
a difference between the first transmission timestamp and the second transmission timestamp is a minimum value among third difference values; and
the third difference values are differences between transmission timestamps of the first message and transmission timestamps of the second message.

9. The method according to claim 1, wherein
the first message and the second message are both periodic messages.

10. The method according to any one of claims 1 to 5 or 7 to 9, wherein
the first satellite and the at least one second satellite are located in a same orbit, and the at least one second satellite is adjacent to the first satellite.

11. The method according to any one of claims 1 to 5 or 7 to 9, wherein
the first satellite and the at least one second satellite are located in different orbits; and
the first message and the second message are both transmitted during an establishment of a connection between the first satellite and a corresponding second satellite.

12. The method according to any one of claims 1 to 5 or 7 to 9, further comprising:
receiving a Global Navigation Satellite System (GNSS) time; and
updating the local time of the first satellite based on the GNSS time.

13. The method according to any one of claims 1 to 5 or 7 to 9, further comprising:
maintaining the local time of the first satellite according to a local time frequency when the first satellite fails to receive the GNSS time.

14. A method for inter-satellite time synchronization, applied to a second satellite, comprising:
receiving a first message sent by at least one first satellite, wherein the first message carries a transmission timestamp;
transmitting first information and/or a second message to the at least one first satellite.

15. The method according to claim 14, wherein
the first information comprises a first difference value and/or a reception timestamp of the first message; and
the first difference value presents a difference between the reception timestamp and a corresponding transmission timestamp of the first message.

16. The method according to claim 14, wherein
the second message carries a transmission timestamp.

17. The method according to claim 14, further comprising:
receiving second information sent by the first satellite;
wherein the second information comprises a second difference value and/or a reception timestamp of the second message; and
the second difference value presents a difference between the reception timestamp and a corresponding transmission timestamp of the second message.

18. The method according to claim 17, further comprising one of:
adjusting or calibrating a local time of the second satellite based on a second time offset between the second satellite and the first satellite; or
when a number of first satellites is greater than or equal to 2, adjusting or calibrating the local time of the second satellite based on a mean or weighted average of second time offsets between the second satellite and different first satellites.

19. The method according to any one of claims 14 to 18, further comprising:
determining the second time offset between the second satellite and the first satellite at least based on the transmission timestamp and/or a corresponding reception timestamp of the first message and the transmission timestamp and/or a corresponding reception timestamp of the second message.

20. The method according to claim 19, wherein the determining the second time offset comprises:
determining a third transmission timestamp of the first message and/or a fourth transmission timestamp of the second message based on the transmission timestamp of the first message and/or the transmission timestamp of the second message;
determining the second time offset between the second satellite and the first satellite based on at least one of:
the third transmission timestamp and a corresponding reception timestamp,
the fourth transmission timestamp and a corresponding reception timestamp, or
a second error correction value.

21. The method according to claim 20, wherein
the third transmission timestamp and the fourth transmission timestamp are identical; or
a difference between the third transmission timestamp and the fourth transmission timestamp is a minimum value among fourth difference values; and
the fourth difference values are differences between transmission timestamps of the first message and transmission timestamps of the second message.

22. The method according to claim 14, wherein
the first message and the second message are both periodic messages.

23. The method according to any one of claims 14 to 18 or 20 to 22, wherein
the at least one first satellite and the second satellite are located in a same orbit, and the second satellite is adjacent to the at least one first satellite.

24. The method according to any one of claims 14 to 18 or 20 to 22, wherein
the at least one first satellite and the second satellite are located in different orbits; and
the second message and the first message are both transmitted during an establishment of a connection between the second satellite and a corresponding first satellite.

25. The method according to any one of claims 14 to 18 or 20 to 22, further comprising:
receiving a GNSS time; and
updating the local time of the second satellite based on the GNSS time.

26. The method according to any one of claims 14 to 18 or 20 to 22, further comprising:
maintaining the local time of the second satellite according to a local time frequency when the second satellite fails to receive the GNSS time.

27. An apparatus for inter-satellite time synchronization, comprising:
a first transmitting unit, configured to transmit a first message to at least one second satellite, wherein the first message carries a transmission timestamp;
a first receiving unit, configured to receive first information and/or a second message sent by the at least one second satellite.

28. An apparatus for inter-satellite time synchronization, comprising:
a second receiving unit, configured to receive a first message sent by at least one first satellite, wherein the first message carries a transmission timestamp;
a second transmitting unit, configured to transmit first information and/or a second message to the at least one first satellite.

29. A first satellite, comprising a first processor and a first communication interface, wherein the first communication interface is configured to:
transmit a first message to at least one second satellite, and
receive first information and/or a second message sent by the at least one second satellite;
wherein the first message carries a transmission timestamp.

30. A second satellite, comprising a second processor and a second communication interface, wherein the second communication interface is configured to:
receive a first message sent by at least one first satellite, and
transmit first information and/or a second message to the at least one first satellite;
wherein the first message carries a transmission timestamp.

31. A satellite, comprising a processor and a memory for storing a computer program executable on the processor, wherein
the processor is configured to, when executing the computer program, perform the method according to any one of claims 1 to 13 or claims 14 to 26.

32. A storage medium, having a computer program stored thereon, wherein
the computer program, when executed by a processor, implements the method according to any one of claims 1 to 13 or claims 14 to 26.
